(19) Europäisches Patentamt
European Patent Office
Office européen des brevets

(11) Veröffentlichungsnummer: **0 014 407**
**B1**

(12) # EUROPÄISCHE PATENTSCHRIFT

(45) Veröffentlichungstag der Patentschrift: **28.10.81**

(51) Int. Cl.³: **C 09 B 67/26**, C 09 B 47/26, D 21 H 3/80, C 09 B 69/04

(21) Anmeldenummer: **80100425.0**

(22) Anmeldetag: **28.01.80**

(54) **Farbstofflösungen sowie deren Herstellung und Verwendung zum Färben von Papier.**

(30) Priorität: **09.02.79 DE 2904928**

(43) Veröffentlichungstag der Anmeldung: **20.08.80 Patentblatt 80/17**

(45) Bekanntmachung des Hinweises auf die Patenterteilung: **28.10.81 Patentblatt 81/43**

(84) Benannte Vertragsstaaten: **CH DE FR GB SE**

(56) Entgegenhaltungen:
**DE-A-1 569 727**
**DE-B-2 719 719**
**FR-A-838 418**
**FR-A-2 316 297**

(73) Patentinhaber: **BAYER AG, Zentralbereich Patente, Marken und Lizenzen, D-5090 Leverkusen 1, Bayerwerk (DE)**

(72) Erfinder: **Groll, Manfred, Dr., Haferkamp 6, D-5000 Koeln 80 (DE)**
Erfinder: **Müller, Friedhelm, Dr., Zum Hahnenberg 62, D-5068 Odenthal (DE)**

**EP 0 014 407 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Farbstofflösungen sowie deren Herstellung und Verwendung zum Färben von Papier

Die Erfindung betrifft Lösungen von Kupferphthalocyaninsulfonsäuresalzen der Formel

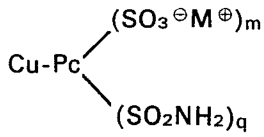

(I)

in der

Cu-Pc einen Kupferphthalocyanin-Rest,

m eine Zahl von 1,8 bis 3,0,

q eine Zahl von 1,0 bis 2,0,

mit der Massgabe, dass die Summe m+q eine Zahl von 2,8 bis 4,0 ist und

$M_m^{\oplus}$ eine Mischung aus $A_n^{\oplus}$ und einem Ammoniumion der Formel

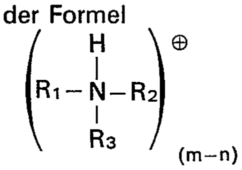

(II)

wobei

$A^{\oplus}$ für ein Alkali- oder $NH_4$-Ion und

n für eine Zahl von 0,8 bis 2,0 stehen,

m die oben angegebene Bedeutung hat und

$R_1$, $R_2$ Wasserstoff, $C_1$-$C_4$-Alkyl oder einen Rest $-(CH_2-CH_2-O)_p-H$ und

$R_3$ den Rest $-(CH_2-CH_2-O)_p-H$ bezeichnen, wobei

p 1, 2, 3, 4, 5 oder 6 ist, in Wasser, das bis zu 10% seines Gewichts an organischen Lösungsmitteln enthalten kann, Verfahren zur Herstellung dieser Lösungen und deren Verwendung zum Färben von Papier.

Von besonderem Interesse sind Lösungen von Kupferphthalocyaninsäuresalzen der beschriebenen Art, bei denen

$R_1$, $R_2$ und $R_3$ $-CH_2-CH_2-O-CH_2-CH_2-OH$,

$R_3-CH_2-CH_2-OH$, $R_2$ und $R_1-C_2H_5$ und

$R_3-CH_2-CH_2-OH$, $R_2$ und $R_1-CH_3$

bezeichnen.

Es ist bekannt, dass zum Färben von Papier mehr und mehr fertige Farbstofflösungen eingesetzt werden, da diese bei der Papierfärbung gegenüber Pulverfarbstoffen erhebliche technische Vorteile mit sich bringen. An die Farbstofflösungen werden jedoch hinsichtlich der Farbstoffkonzentration, der Lagerstabilität und der Eignung für den Einsatz bei der Herstellung gefärbter Papiere hohe Anforderungen gestellt, beispielsweise soll der Elektrolytgehalt der Lösungen möglichst niedrig sein. Diese Forderungen sind oft nicht oder nur unter erheblichen Aufwendungen zu erfüllen. Das gilt in besonderem Masse für blaugrüne bis türkisfarbene Nuancen, die im allgemeinen mit Kupferphthalocyaninsulfonsäuren erzielt werden.

Die erfindungsgemässen Farbstofflösungen erfüllen die gestellten Forderungen besonders gut. Sie sind darüber hinaus technisch einfach herzustellen und weisen einen besonders geringen Elektrolytgehalt auf.

Zur Herstellung wird Kupferphthalocyanin in üblicher Weise mit Chlorsulfonsäure und gegebenenfalls Thionylchlorid behandelt bis 2,8 bis 4,0 Sulfo-Gruppen, in das Phthalocyanin-Molekül eingeführt sind, von denen 0,7 bis 1,5 als Sulfonsäure-Gruppen, die restlichen als Sulfonsäurechlorid-Gruppen vorliegen sollen.

Die Sulfierungsschmelze wird auf Eis ausgetragen und die ausgefallene Kupferphthalocyaninsulfochloridsulfonsäure abgesaugt und mit 0,5%iger eiskalter Salzsäure gewaschen. Die Kupferphthalocyaninsulfochloridsulfonsäure-Paste wird in Eiswasser angeschlagen und mit Ammoniak und einem Amin der Formel

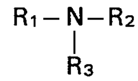

(III)

worin

$R_1$, $R_2$ und $R_3$ die vorstehend genannte Bedeutung haben, gegebenenfalls unter Zusatz von Alkalihydroxyd als säurebindenden Mittel, in der gewünschten Konzentration zur erfindungsgemässen Lösung umgesetzt.

Die erfindungsgemässen Lösungen eignen sich hervorragend zum Färben von Papier sowohl in der Masse als auch auf der Oberfläche nach den hierfür üblichen Färbeverfahren.

Unter Verwendung der neuen Farbstofflösungen erhaltene Papierfärbungen zeigen im schwach sauren Medium nur einen geringen Farbumschlag nach grün.

Aus der DE-AS 2719719 sind bereits wässrige Lösungen von Kupferphthalocyaninsulfonsäuren bekannt, welche keine Sulfonamidgruppen enthalten. Diese Literaturstelle legt die beanspruchten Lösungen in keiner Weise nahe, da sie keinen Hinweis auf die Einführung von Sulfonamidgruppen gibt. Gegenstand der DE-AS 1569727 ist ein Verfahren zur Herstellung von Phthalocyaninfarbstoffen mit Sulfonamidgruppen, deren Amidstickstoff durch ein oder zwei Hydroxyalkylgruppen substituiert ist und deren Sulfonsäuregruppen in Form von Salzen mit Alkoxyalkylaminen vorliegen. Auch diese Literaturstelle gibt keinerlei Hinweise darauf, dass Kupferphthalocyaninfarbstoffe mit unsubstituierten Sulfonamidgruppen deren Sulfonsäuregruppen in Form von Salzen mit Hydroxyalkylaminen vorliegen, besonders günstige wässrige Lösungen liefern. In der FR-PS 838418 werden im wesentlichen Phthalocyaninfarbstoffe beschrieben, welche sich für die Einarbeitung in Lacke eignen. Farbstoffe mit unsubstituierter Sulfonamidgruppe und Sulfogruppen in Form der Hydroxyalkylaminsalze werden weder beschrieben noch nahegelegt. Schliesslich werden in der FR-OS 2316297 Flüssigeinstellungen von Phthalocyaninfarbstoffen mit freier Sulfonsäuregruppe und Dimethylaminopropyl-Sulfonamidgruppe beschrieben, die zwingend N-Methylpyrrolidon, Benzylalkohol und eine aliphatische Carbonsäure enthalten. Auch diese Literaturstelle gibt keinen Hinweis auf die beanspruchten Lösungen.

*Beispiel 1*

In 435 g Chlorsulfonsäure werden 57,5 g Kupferphthalocyanin gelöst und etwa 5 Stunden bei 125° C gerührt bis etwa 3,4 Sulfonsäuregruppen in das Phthalocyanin-Molekül eingeführt sind. Man kühlt die Schmelze auf 25° C ab und trägt sie auf Eis aus, wobei die Temperatur der entstehenden Suspension +3° C nicht überschreiten soll. Die ausgefallene Kupferphthalocyaninsulfochloridsulfonsäure wird abgesaugt und mit etwa 2000 ml 0,3 %iger eiskalter Salzsäure gewaschen.

Die Paste der Kupferphthalocyaninsulfochloridsulfonsäure wird in 100 ml Eiswasser angeschlagen und mit einer Mischung von 70 ml 5n-Ammoniak, 50 ml 2n-Natronlauge und 60 g Tris-[2-(2-hydroxy-ethoxy)ethyl]amin versetzt. Nun steigert man die Temperatur der Suspension langsam auf 25° C, rührt einige Stunden bei dieser Temperatur, erhitzt zur Beendigung der Reaktion kurz auf 70-80° C. Nach dem Abkühlen neutralisiert man gegebenenfalls mit etwas Tris-[2-(2-hydroxy-ethoxy)-ethyl]-amin und klärt, wenn nötig unter Zusatz von etwas Klärhilfe.

Man erhält eine konzentrierte Farbstofflösung des sulfierten Kupferphthalocyanins, die insbesondere für die Färbung von Papier geeignet ist.

Man erhält ähnlich konzentierte Farbstofflösungen, wenn man das in Absatz 2 genannte Tris-[2-(2-hydroxy-ethoxy)ethyl]-amin durch äquivalente Mengen von 2-(2-Dimethyl-amino-ethoxy)-ethanol, 2-(2-Diethylaminoethoxy)-ethanol, Dimethylamino-ethanol, Diethylaminoethanol, Bis-(2-hydroxyethyl)-methylamin, Tris-(2-hydroxyethyl)-amin oder Tris-(2-hydroxypropyl)-amin ersetzt.

*Beispiel 2*

Zu 200 g eines 2,5%igen Papierbreies, bestehend aus 50% gebleichten Kiefernsulfit und 50% gebleichtem Birkensulfit mit einem Malgrad von SR 35° werden 10 g einer 0,5%igen Lösung der Farbstoff-Flüssigeinstellung gemäss Beispiel 1, Absatz 2 unter Rühren zugegeben. Anschliessend wird mit 10 g einer 1%igen Harzleim-Lösung und 20 g einer 1%igen Aluminiumsulfat-Lösung geleimt und mit 500 g Wasser verdünnt. Nach 15-minütigem Rühren wird der gefärbte Papierbrei auf einen Blattbildner mit Filterpapierunterlage gegossen und abgesaugt. Das Papierblatt wird zwischen zwei Filterpapierblättern und gleichgrossen Filzen in einer Presse abgegautscht und danach auf einem Heisszylinder bei 100° C ca. 5 Minuten getrocknet. Man erhält ein brillant türkis gefärbtes Papier.

*Beispiel 3*

In einer Leimpressenlösung bestehend aus 50 g kationischer Stärke und 20 g Leimungsmittel (ABS-Polymer) verrührt man 10 g der nach Beispiel 1, Absatz 2 erhaltenen Farbstoff-Flüssigeinstellung und färbt die Rohpapiere oder schwach geleimten. Papiere bei einer Durchgangsgeschwindigkeit von ca. 5 bis 7 m/min bei 20° C und einem Andruck von ca. 25%. Man erhält gleichmässig brillant türkis gefärbte Papiere.

**Patentansprüche**

1. Wässrige Lösungen von Kupferphthalocyaninsulfonsäuresalzen der Formel

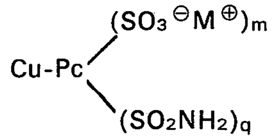

(I)

in der

Cu-Pc einen Kupferphthalocyanin-Rest,

m eine Zahl von 1,8 bis 3,0,

q eine Zahl von 1,0 bis 2,0,

mit der Massgabe, dass die Summe m+q eine Zahl von 2,8 bis 4,0 ist und

$M_m^{\oplus}$ eine Mischung aus $A_n^{\oplus}$ und einem Ammoniumion der Formel

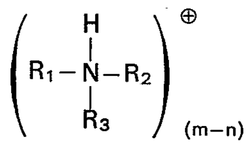

(II)

wobei

$A^{\oplus}$ für ein Alkali- oder $NH_4$-Ion und

n für eine Zahl von 0,8 bis 2,0 stehen,

m die oben angegebene Bedeutung hat und

$R_1$, $R_2$ Wasserstoff, $C_1$-$C_4$-Alkyl oder einen Rest $-(CH_2-CH_2-O)_p-H$ und

$R_3$ den Rest $-(CH_2-CH_2-O)_p-H$ bezeichnen, wobei

p 1, 2, 3, 4, 5 oder 6 ist.

2. Wässrige Lösungen gemäss Anspruch 1, wobei $R_1$, $R_2$ und $R_3$ $-CH_2-CH_2-O-CH_2-CH_2-OH$ bezeichnen.

3. Wässrige Lösungen gemäss Anspruch 1, wobei $R_3-CH_2-CH_2-OH$ sowie $R_2$ und $R_1-C_2H_5$ bezeichnen.

4. Wässrige Lösungen gemäss Anspruch 1, wobei $R_3-CH_2-CH_2-OH$ sowie $R_2$ und $R_1-CH_3$ bezeichnen.

5. Verfahren zur Herstellung von Lösungen gemäss Anspruch 1, dadurch gekennzeichnet, dass man Kupferphthalocyaninsulfochloridsulfonsäuren mit 2,8 bis 4,0 Sulfogruppen, wovon 0,7 bis 1,5 Gruppen in Form von Sulfonsäuregruppen vorliegen, gegebenenfalls unter Zusatz von Alkalihydroxid als säurebindendem Mittel, in wässrigem Medium mit Ammoniak und einem Amin der Formel

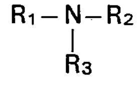

worin

$R_1$, $R_2$ und $R_3$ die in Anspruch 1 angegebene Bedeutung haben,

zur Reaktion bringt.

6. Verwendung von Farbstofflösungen gemäss Anspruch 1 zum Färben von Papier.

## Claims

1. Aqueous solutions of copper phthalocyaninesulphonic acid salts of the formula

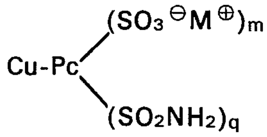

(I)

in which

Cu-Pc a copper phthalocyanine radical,

m a number from 1.8 to 3.0,

q a number from 1.0 to 2.0, with the proviso that the sum $m+q$ is a number from 2.8 to 4.0, and

$M_m^{\oplus}$ a mixture of $A_n^{\oplus}$ and an ammonium ion of the formula

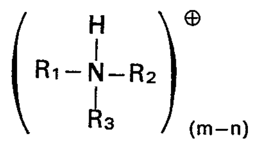

(II)

wherein

$A^{\oplus}$ represents an alkali metal ion or $NH_4$ ion and

n represents a number from 0.8 to 2.0,

m has the meaning indicated above,

$R_1$ and $R_2$ designate hydrogen, $C_1$-$C_4$-alkyl or a radical $-(CH_2-CH_2-O)_p-H$ and

$R_3$ designates the radical $-(CH_2-CH_2-O)_p-H$, wherein

p is 1, 2, 3, 4, 5 or 6.

2. Aqueous solutions according to Claim 1, wherein

$R_1$, $R_2$ and $R_3$ designate $-CH_2-CH_2-O-CH_2-CH_2-OH$.

3. Aqueous solutions according to Claim 1, wherein

$R_3$ designates $-CH_2-CH_2-OH$ and

$R_2$ and $R_1$ designate $-C_2H_5$.

4. Aqueous solutions according to Claim 1, wherein

$R_3$ designates $-CH_2-CH_2-OH$ and

$R_2$ and $R_1$ designate $-CH_3$.

5. Process for the preparation of solutions according to Claim 1, characterised in that copper phthalocyanine-(sulphonyl chloride)-sulphonic acids with 2.8 to 4.0 sulpho groups, of which 0.7 to 1.5 groups are present in the form of sulphonic acid groups, are reacted with ammonia and an amine of the formula

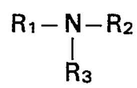

(III)

wherein

$R_1$, $R_2$ and $R_3$ have the meaning indicated in Claim 1,

if appropriate with the addition of an alkali metal hydroxide as an acid-binding agent.

6. Use of dyestuff solutions according to Claim 1 for dyeing paper.

## Revendications

1. Solutions aqueuses de sels d'acides cuprophtalocyaninesulfoniques de formule

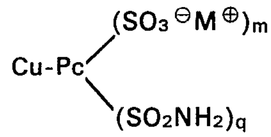

(I)

dans laquelle

Cu-Pc est un reste de cuprophtalocyanine,

m est un nombre de 1,8 à 3,0,

q est un nombre de 1,0 à 2,0, avec la condition que la somme $m+q$ soit un nombre de 2,8 à 4,0 et

$M_m^{\oplus}$ est un mélange de $A_n^{\oplus}$ et d'un ion ammonium de formule

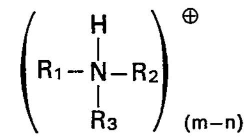

(II)

dans laquelle

$A^{\oplus}$ représente un ion alcalin ou $NH_4$ et

n est un nombre de 0,8 à 2,0,

m a la signification indiquée ci-dessus et

$R_1$, $R_2$ représentent l'hydrogène, un alkyle en $C_1$-$C_4$ ou un reste $-(CH_2-CH_2-O)_p-H$ et

$R_3$ représente le reste $-(CH_2-CH_2-O)_p-H$ où

p est 1, 2, 3, 4, 5 ou 6.

2. Solutions aqueuses selon la revendication 1, caractérisées en ce que $R_1$, $R_2$ et $R_3$ représentent $-CH_2-CH_2-O-CH_2-CH_2-OH$.

3. Solutions aqueuses selon la revendication 1, caractérisées en ce que $R_3$ représente $-CH_2-CH_2-OH$ et $R_2$ et $R_1-C_2H_5$.

4. Solutions aqueuses selon la revendication 1, caractérisées en ce que $R_3$ représente $-CH_2-CH_2-OH$ et $R_2$ et $R_1-CH_3$.

5. Procédé pour la préparation de solutions selon la revendication 1, caractérisé en ce que l'on fait réagir des acides cuprophtalocyanine-sulfochlorure-sulfoniques ayant 2,8 à 4,0 groupes sulfo dont 0,7 à 1,5 groupe est sous forme de groupe acide sulfonique, éventuellement avec addition d'hydroxyde alcalin comme accepteur d'acide, en milieu aqueux avec l'ammoniaque et une amine de formule

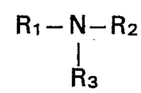

(III)

dans laquelle $R_1$, $R_2$ et $R_3$ ont la signification indiquée dans la revendication 1.

6. Utilisation de solutions de colorants selon la revendication 1 pour la coloration du papier.